(19) Europäisches Patentamt
European Patent Office
Office européen des brevets

(11) **EP 3 498 146 A1**

(12) **EUROPEAN PATENT APPLICATION**
published in accordance with Art. 153(4) EPC

(43) Date of publication:
**19.06.2019 Bulletin 2019/25**

(21) Application number: **17839588.5**

(22) Date of filing: **10.08.2017**

(51) Int Cl.:
*A47L 23/22* (2006.01)          *B32B 5/26* (2006.01)
*B32B 27/12* (2006.01)          *D21H 13/00* (2006.01)
*D21H 17/67* (2006.01)

(86) International application number:
**PCT/JP2017/029162**

(87) International publication number:
**WO 2018/030524 (15.02.2018 Gazette 2018/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.08.2016 JP 2016157953**

(71) Applicant: **3M Innovative Properties Company
Saint Paul, Minnesota 55133-3427 (US)**

(72) Inventors:
• **OHASHI Tsuyoshi
Sagamihara-shi
Kanagawa 252-5285 (JP)**

• **SATO Katsuyuki
Sagamihara-shi
Kanagawa 252-5285 (JP)**
• **TOTOKI Takatoshi
Sagamihara-shi
Kanagawa 252-5285 (JP)**
• **MIZOGUCHI GORGOLL Ricardo
Sagamihara-shi
Kanagawa 252-5285 (JP)**

(74) Representative: **Vossius & Partner
Patentanwälte Rechtsanwälte mbB
Siebertstrasse 3
81675 München (DE)**

(54) **OIL ABSORBING MAT AND THICKENING INHIBITOR FOR OIL**

(57)    An oil-absorbing mat for disposing on a floor and absorbing an oil, comprising:

an oil absorber for absorbing the oil, the oil absorber being provided on the upper surface of the oil-absorbing mat; and a permeation preventing layer for preventing the permeation of the oil, the permeation preventing layer being provided on the floor surface of the oil-absorbing mat; wherein the oil absorber has a smoothness of 0.8 s or more as measured on the basis of JIS P 8155; and wherein the oil absorber has an air resistance (Oken Type) of 28 s or less as measured on the basis of JIS P 8117.

[FIG. 2]

**Description**

FIELD OF THE INVENTION

The present invention relates to an oil-absorbing mat and to a high viscosity inhibitor of oil.

BACKGROUND

Conventionally, the mat as described in Patent Document 1 is known as an oil-absorbing mat for absorbing oil. In the oil-absorbing mat, a cotton-like pulp having high oil-water absorbency is provided between two surface sheets having high oil-water capturing properties to form a non-woven fabric mat body. Then the mat body is supported by an anti-slipping sheet having oil-water impermeability.

PRIOR ART DOCUMENTS

Patent Documents

Patent Document 1: JP2005-13418A

SUMMARY OF THE INVENTION

Problem to be Solved by the Invention

However, in the above-described oil-absorbing mat, when a walker was walking on the oil-absorbing mat, the absorption of oil on the shoe sole of the walker was not sufficient and the resulting unabsorbed oil was discharged. Therefore, there is a need for improving the absorbency of oils and reducing of the oil discharging.

MEANS FOR SOLVING THE PROBLEM

The oil-absorbing mat according to one aspect of the present invention is for disposing on a floor and absorbing oil, comprising:
an oil absorber for absorbing the oil, the oil absorber being provided on the upper surface of the oil-absorbing mat; and a permeation preventing layer for preventing the permeation of the oil, the permeation preventing layer being provided on the floor surface of the oil-absorbing mat; wherein the oil absorber has a smoothness of 0.8 s or more as measured on the basis of JIS P 8155; and wherein the oil absorber has an air resistance (Oken Type) of 28 s or less as measured on the basis of JIS P 8117.
According to the aspect, the oil absorber has a smoothness of 0.8 s or more as measured on the basis of JIS P 8155. Thus, the high smoothness of the oil absorber increases the contactability between the oil absorber and the walker's shoe sole. Therefore, the oil absorber can collect the oil from the shoe sole sufficiently. Further, the oil absorber has an air resistance (Oken Type) of 28 s or less as measured on the basis of JIS P 8117. By having low air resistance, the oil absorber can absorb the oil collected from the shoe sole and permeate the oil inside the oil absorber. Thus, by satisfying both conditions suitable for the smoothness and the air resistance of the oil absorber, the absorbency of oil can be improved and the oil discharging can be reduced.
In the oil-absorbing mat according to another aspect, the thickness under compression as shown in the following equation (1) may be 75% or more when the stacking sample obtained by stacking ten test specimens of the oil absorber has a thickness t1 before compression and a thickness t2 under pressure of 14,700 N/m$^2$:

$$\text{Thickness under compression } (\%) = (t2 / t1)*100 \quad \ldots(1)$$

In the oil-absorbing mat according to another aspect, the oil absorber may comprise a surface layer for preserving the surface of the oil absorber; and an oil holding layer for holding the oil permeating through the surface layer, the oil holding layer being provided beneath the surface layer.
In the oil-absorbing mat according to another aspect, the oil absorber may contain 65 % or more of a fiber having a diameter of 2 to 10 micrometers, and the oil absorber may be composed of a first non-woven fabric having a weight per unit area of 140 to 1,200 g/m$^2$.
In the oil-absorbing mat according to another aspect, the oil absorber may be composed of a second non-woven fabric containing a fiber formed from a pulp.

In the oil-absorbing mat according to another aspect, the second non-woven fabric may contain from 10 to 50% by mass of a porous oil absorbing particle having a diameter of 5 to 30 micrometers.

In the oil-absorbing mat according to another aspect, the surface layer may be a woven fabric containing 34% by mass or more of a fiber having a diameter of 5 to 20 micrometers.

The oil-absorbing mat according to another aspect of the present invention is for disposing on a floor and absorbing an oil, comprising:

an oil absorber for absorbing the oil, the oil absorber being provided on the upper surface of the oil-absorbing mat; and a permeation preventing layer for preventing the permeation of the oil, the permeation preventing layer being provided on the floor surface of the oil-absorbing mat; wherein the oil absorber contains 34% by mass or more of a fiber having a diameter of 0. 3 to 20 micrometers; wherein the oil absorber has a smoothness of 0.3 s or more as measured on the basis of JIS P 8155; and wherein the oil absorber has an air resistance (Oken Type) of 28 s or less as measured on the basis of JIS P 8117.

In the oil-absorbing mat according to another aspect, the oil absorber may comprise a surface layer for preserving the surface of the oil absorber; and an oil holding layer for holding the oil permeating through the surface layer, the oil holding layer being provided beneath the surface layer.

In the oil-absorbing mat according to another aspect, the oil absorber may contain 65% or more of a fiber having a diameter of 2 to 10 micrometers, and the oil absorber may be composed of a third non-woven fabric having a weight per unit area of 100 to 1,200 g/m$^2$.

In the oil-absorbing mat according to another aspect, the oil absorber may be composed of a fourth non-woven fabric containing a fiber formed from a pulp.

In the oil-absorbing mat according to another aspect, the fourth non-woven fabric may contain from 10 to 50% by mass of a porous oil absorbing particle having a diameter of 5 to 30 micrometers.

In the oil-absorbing mat according to another aspect, the oil absorber may contain 65% by mass or more of a fiber having a diameter of 2 to 20 micrometers, and the oil absorber may be composed of a fifth non-woven fabric having a weight per unit area of 75 to 220 g/m$^2$.

In the oil-absorbing mat according to another aspect, the surface layer may be a knitted fabric containing 34 % by mass or more of a fiber having a diameter of 5 to 20 micrometers.

The high viscosity inhibitor of oil according to one aspect of the present invention is for spraying on a floor around the disposed oil-absorbing mat according to one aspect or another aspect of the present invention, comprising from 0. 1 to 2 % by mass of an anti-oxidant and 97 % by mass or more of water.

In the high viscosity inhibitor of oil according to another aspect, the anti-oxidant contained in the high viscosity inhibitor of oil may be vitamin E.

EFFECT OF THE INVENTION

According to the present invention, the absorbency of oils can be improved and the oil discharging can be reduced.

BRIEF DESCRIPTION OF THE DRAWINGS

Fig. 1 is a perspective view of an oil-absorbing mat according to an embodiment of the present invention.
Fig. 2 is a cross-sectional view of an oil-absorbing mat.
Fig. 3 is a schematic view showing a method for measuring the reducing level of oil discharging and the reducing level of oil reversing in the first embodiment.
Fig. 4 is a table showing each measurement results of Examples and Comparative Examples according to the first embodiment.
Fig. 5 is a table showing each measurement results of Examples and Comparative Examples according to the first embodiment.
Fig. 6 is a table showing each measurement results of Examples and Comparative Examples according to the first embodiment.
Fig. 7 is a graph showing measurement results of the durability of oil absorbency in the first embodiment.
Fig. 8 is a table showing each measurement results of Examples according to the second embodiment.
Fig. 9 is a table showing each measurement results of Comparative Examples according to the second embodiment.
Fig. 10 is a table showing each measurement results of Examples and Comparative Examples according to the third embodiment.

Fig. 11 is a table showing each measurement results of Examples and Comparative Examples according to the third embodiment.

Fig. 12 is a plane view when the conformation according to third embodiment is viewed from above.

EMBODIMENTS FOR CARRYING OUT THE INVENTION

Hereinafter, the embodiments of the present invention will be described in more detail with reference to the appending figures. Note that the same reference number is assigned for the same or the equivalent element, and the overlapping description will be omitted.

[First Embodiment]

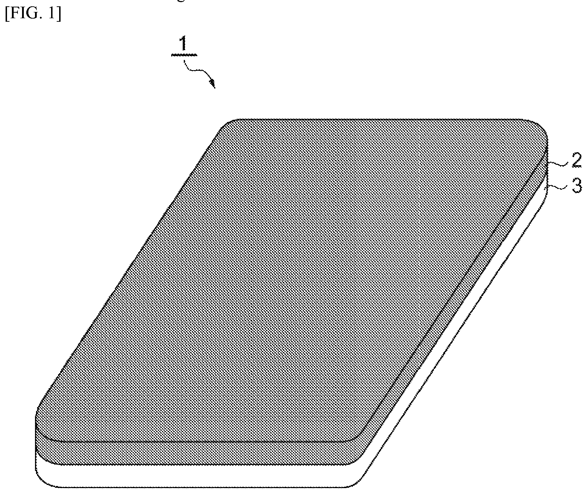

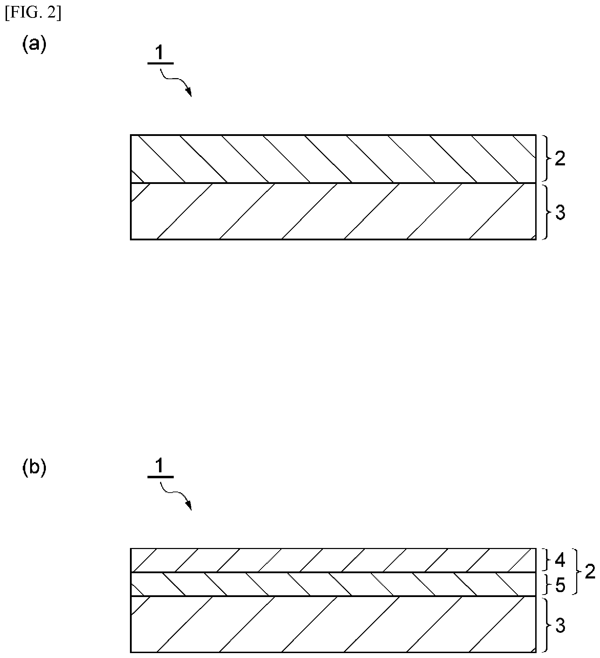

Fig. 1 is a perspective view of an oil-absorbing mat according to the embodiment. Fig. 2 is a cross-sectional view of the oil-absorbing mat shown in Fig. 1. The oil-absorbing mat 1 is a mat which is disposed on a floor and absorbs oil adhered on the walker's shoe sole. When the walker having shoes adhering oil on the shoe sole is stepping on the oil-absorbing mat 1, the oil-absorbing mat 1 can absorb the oil on the shoe sole immediately and remove the oil from the shoe sole. Thus, when the walker is entering in a certain area, carrying the oil in the area is prevented. The oil-absorbing mat 1 comprises an oil absorber 2 which is provided on the upper surface of the oil-absorbing mat 1 and absorbs the oil; and a permeation preventing layer 3 which is provided on the floor surface of the oil-absorbing mat 1 and prevents the permeation of the oil.

The permeation preventing layer 3 is a member being composed of the material selected from a polyolefin, a polyurethane, a thermoplastic elastomer, vinyl chloride or a latex. The permeation preventing layer 3 may contain a flame retardant including magnesium hydroxide or aluminum hydroxide in order to provide flame retardancy. The material of the permeation preventing layer 3 is a material in which oil can be prevented from permeating through the floor surface even if the oil absorbed in the oil absorber 2 is permeated in the preventing layer 3. The size of the permeation preventing layer 3 in a surface direction is set so as to enclose at least all area of the oil absorber 2. The size may be set so as to occupy the area larger than all area of the oil absorber 2. Although the thickness of the permeation preventing layer 3 is not particularly limited, the thickness may be set to be from about 0.03 mm to about 1 mm. The adhesive treatment may be performed on the bottom surface of the permeation preventing layer 3 in order to prevent the position aberration by jointing the floor disposed. The adhesive treatment may be performed on the bottom surface of the permeation preventing layer 3 directly. Alternatively, an adhesive material such as a double-coated tape may be provided on the bottom surface of the permeation preventing layer 3.

The oil absorber 2 may have a smoothness of 0.8 sec or more, and more preferably 2.0 s or more, as measured on the basis of JIS P 8155. The smoothness is represented by a time required for leaking a certain amount of compressed air at a certain pressure from the space between a measuring ring and a test specimen in a condition that the test specimen is pressed to the measuring ring at a certain pressure. Therefore, the higher the smoothness is, the time required for leaking compressed air is longer. The lower the smoothness is, the time required for leaking compressed air is shorter. Since the smoothness of the oil absorber 2 is sufficiently high so as to satisfy the above-described value, the oil absorber 2 can sufficiently contact with the shoe sole of the walker which is walking on the oil-absorbing mat, and thereby can collect the oil on the shoe sole.

The oil absorber 2 may have an air resistance (Oken Type) of 28 s or less, and more preferably 14 s or less as measured on the basis of JIS P 8117. The air resistance is represented by a time required for penetrating a certain volume of air through a test specimen per a unit area and per a unit pressure difference using an Oken Type tester. Therefore, the higher the air resistance is, the time required for penetrating a certain volume of air through a test specimen is longer. The lower the air resistance is, the time required for penetrating a certain volume of air through a test specimen is shorter. When the air resistance of the oil absorber 2 is low so as to satisfy the above-described value, the oil collected on the surface of the oil absorber 2 is rapidly absorbed inside the oil absorber 2.

Then the oil absorber 2 is a member that is hard to be deformed when the walker is stepping on the oil absorber 2. Thus, by having less deformability, the oil absorber 2 can decrease re-adhering the absorbed oil on the walker's shoe sole, that is, oil reversing. More specifically, the thickness under compression as shown in the following equation (1) may be 75% or more, and more preferably 83% or more when the stacking sample obtained by stacking ten test specimens of the oil absorber has a thickness t1 before compression and a thickness t2 under pressure of 14,700 N/m$^2$:

$$\text{Thickness under compression } (\%) = (t2 / t1){*}100 \quad \ldots(1)$$

Next, the specific conformation of the oil absorber 2 having the above-described properties will be described.

Hereinafter, based on the general structure difference, the oil absorber 2 will be described by categorizing into a first conformation, a second conformation, and a third conformation. However, each conformation may satisfy at least the above-described conditions of the smoothness and the air resistance, and each conformation does not have to satisfy properties of the less deformability necessarily.

(First Conformation)

The first conformation of the oil absorber 2 has a conformation as shown in Fig. 2(a). Then, the oil absorber 2 is composed of the first non-woven fabric having a fiber diameter of 2 to 10 micrometers. The oil absorber 2 contains 65% or more of a fiber having a diameter of 2 to 10 micrometers. Since the space between fibers of the oil absorber 2 is sufficiently small, the oil absorber 2 has high smoothness while limiting the air resistance to a certain value. Since the fiber the oil absorber 2 has a dense structure, the oil absorber 2 is hard to be deformed. The oil absorber 2 is obtained by heat pressing a non-woven fabric. For example, the press temperature was set to be from 80 to 100°C, the oil absorber may be pressed at a pressure of 0.1 to 5 MPa for 30 to 180 sec. For example, the material of the first non-woven fabric may be PP, PET, rayon, wool, nylon, acryl, vinylon, or aramid fiber. The weight per unit area of the first non-woven fabric may be from 140 to 1,200 g/m$^2$. The thickness of the oil absorber 2 according to the first conformation may be from 0.2 to 3.0 mm. Hydrophilization treatment may be performed on the first non-woven fabric with a reagent including a surfactant.

(Second Conformation)

The first conformation of the oil absorber 2 is disposed of a non-woven fabric having a conformation as shown in Fig. 2(a). Further, the second non-woven fabric may contain from 10 to 50% by mass of a porous oil absorbing particle having a diameter of 5 to 30 micrometers. More preferably, the second non-woven fabric may contain from 25 to 35% by mass of the porous oil absorbing particle. Diatomaceous earth, pearlite, a calcium silicate particle, an activated carbon, or plum charcoal may be used as the porous oil absorbing particle. The thickness of the oil absorber 2 according to the second conformation may be from 90 to 360 g/m$^2$. The freeness of the oil absorber 2 according to the second conformation may be from 450 to 650 ml. The thickness of the oil absorber 2 according to the second conformation may be from 0.2 to 1.0 mm.

(Third Conformation)

The third conformation of the oil absorber 2 has a conformation as shown in Fig. 2(b). The oil absorber 2 comprises a surface layer 4 for preserving the surface of the oil absorber; and an oil holding layer 5 for holding the oil permeating through the surface layer 4, the oil holding layer 5 being provided beneath the surface layer 4. The surface layer 4 may be a woven fabric containing 34% by mass or more of a fiber having a diameter of 5 to 20 micrometers (hereinafter, sometimes referred to as a microfiber). More preferably, surface layer 4 may be a woven fabric containing 66% by mass or more of a microfiber. Containing more microfiber nearer 100 wt% as possible is preferred. In the surface layer 4, the microfibers may be in form of the assembled fibers, and the fiber diameter of the assembled fibers may be from 84 to 160 dtex. The number of the microfibers contained in one of the assembled fibers may be from 264 to 1,152. Further, the material such as PET, nylon or PP may be adopted as the material of the microfiber. For example, the material of the microfiber may be 65% of PET and 35% of nylon. Further, the weight per unit area of the surface layer 4 may be from 160 to 215 g/m$^2$, and more preferably from 200 to 215 g/m$^2$. The thickness of the surface layer 4 may be from 0.3 to 0.5 mm.

The oil holding layer 5 may be a non-woven fabric having a fiber diameter of 2 to 10 micrometers. For example, the material of the non-woven fabric may be PP, PET, wool, rayon, nylon, acryl, vinylon, or aramid fiber and the like. The thickness of the oil holding layer 5 may be from 1.5 to 5.0 mm. Then, the surface layer 4 and the oil holding layer 5 may be adhered by heat pressing with a mesh hot-melt sheet. In this case, the press temperature was set to be from 80 to 100°C, they may be pressed at a pressure of 0.1 to 5 MPa for 30 to 180 sec.

Next, the action and effect of the oil-absorbing mat 1 according to the embodiment will be described.

In the oil-absorbing mat 1, the oil absorber 2 has a smoothness of 0.8 s or more as measured on the basis of JIS P 8155. Thus, the high smoothness of the oil absorber increases the contactability between the oil absorber 2 and the walker's shoe sole. Therefore, the oil absorber 2 can collect the oil from the shoe sole sufficiently. Further, the oil absorber 2 has an air resistance (Oken Type) of 28 s or less as measured on the basis of JIS P 8117. By having low air resistance, the oil absorber 2 can absorb the oil collected from the shoe sole and permeate the oil inside the oil absorber. Thus, by satisfying both conditions suitable for the smoothness and the air resistance of the oil absorber 2, the absorbency of oils can be improved and the oil discharging can be reduced.

In the oil-absorbing mat 1, the thickness under compression as shown in the following equation (1) is 75% or more when the stacking sample obtained by stacking ten test specimens of the oil absorber 2 has a thickness t1 before compression and a thickness t2 under pressure of 14,700 N/m$^2$. Thus, by having less deformability, the oil absorber 2 can decrease re-adhering the absorbed oil in the oil absorber 2 on the walker's shoe sole, that is, oil reversing.

$$\text{Thickness under compression } (\%) = (t2 \diagup t1)*100 \quad …(1)$$

In the oil-absorbing mat 1, the oil absorber 2 comprises a surface layer 4 for preserving the surface of the oil absorber; and an oil holding layer 5 for holding the oil permeating through the surface layer 4, the oil holding layer 5 being provided beneath the surface layer 4. Since the oil absorber 2 comprises the surface layer 4 for preserving the surface based on the conformation, the durability of the oil absorber 2 can be improved. Further, since the oil absorber 2 comprises the oil holding layer 5 inside the surface layer 4, the durability of oil absorbency can be prolonged.

In the oil-absorbing mat 1, the fiber diameter of the oil absorber 2 is from 2 to 10 micrometers, and the oil absorber 2 is obtained from the first non-woven fabric compressed, for example, by heat pressing. The first non-woven fabric contains 65% or more of a fiber having a diameter of 2 to 10 micrometers, and the first non-woven fabric has a weight per unit area of 140 to 1,200 g/m$^2$. According to the conformation, the above-described conditions of the smoothness and the air resistance can be satisfied. Essentially, if the smoothness is improved, then the air resistance is increased. However, according to the conformation, the smoothness can be increased and the air resistance can be decreased. Then, since the space between fibers is small, re-adhering the absorbed oil can be prevented.

In the oil-absorbing mat 1, the oil absorber 2 is composed of a second non-woven fabric containing a fiber formed from a pulp. According to the conformation, the above-described conditions of the smoothness and the air resistance can be satisfied. Essentially, if the smoothness is improved, then the air resistance is increased. However, according to the conformation, the smoothness can be increased and the air resistance can be decreased.

In the oil-absorbing mat 1, the second non-woven fabric contains from 10 to 50% by mass of a porous oil absorbing particle having a diameter of 5 to 30 micrometers. According to the conformation, the oil absorbency can be improved.

In the oil-absorbing mat 1, the surface layer 4 is a woven fabric containing 34% by mass or more of a fiber having a diameter of 5 to 20 micrometers. By including more than a certain amount of the fine fiber, the surface can be preserved and the smoothness of the surface can be improved.

Note that the present invention is not limited to the above-described embodiments. For example, any conformation other than the first conformation, the second conformation and the third conformation can be adopted as long as the above-described conditions of the smoothness and the air resistance can be satisfied.

EXAMPLES

Next, the examples of the present invention will be described. However, the present invention is not limited to the examples.

(Example 1)

As Example 1, an oil-absorbing mat by applying the oil absorber according the above-described "First Conformation" was prepared. In this Example, a heat pressed hydrophilic PP non-woven fabric (manufactured by 3M: 3M™ Chemical Sorbent P-110) was adopted as the oil absorber. The condition for heat pressing was a temperature of 80°C, a pressure of 0.1 MPa, and a press time of 30 sec.

(Example 2)

As Example 2, an oil-absorbing mat by applying the oil absorber according the above-described "Second Conformation" was prepared. In this example, a paper containing 70% by mass of a non-woven fabric having a pulp as the fiber and 30% by mass of diatomaceous earth was adopted. In Example 2, the freeness of the oil absorber was 590 ml. Further, an example adopting an oil absorber having a freeness of 450 ml and a weight per unit area of 180 g was considered as Example 2-1. An example adopting an oil absorber having a freeness of 450 ml and a weight per unit area of 360 g was considered as Example 2-2. An example adopting an oil absorber having a freeness of 450 ml and a weight per unit area of 90 g was considered as Example 2-3. An example adopting an oil absorber having a freeness of 650 ml and a weight per unit area of 180 g was considered as Example 2-4. However, an example adopting an oil absorber having a freeness of 180 ml and a weight per unit area of 180 g was considered as Comparative Example 4 because the air resistance was too high. In Example 2, a regenerated pulp was used as a pulp. In Examples 2-1 to 2-4 and Comparative Example 4, a natural coniferous tree pulp was used as a pulp.

(Example 3)

As Example 3, an oil-absorbing mat by adopting an oil absorber being solely composed of a woven fabric by using a microfiber having a fiber diameter of 5 to 20 micrometers was prepared. In this example, the fiber diameter of the assembled fibers of the microfibers was 84 dtex, and the number of the microfibers contained in one of the assembled fibers was 264. The material of the fiber in the microfiber was 65% of PET and 35% of nylon. The weight per unit area was 215 g/m$^2$.

(Example 4)

As Example 4, an oil-absorbing mat by adopting the oil absorber according the above-described "Third Conformation" was prepared. In this example, an oil absorber being composed of the woven fabric by using a microfiber (used in Example 3) as the surface layer and the hydrophilic PP non-woven fabric (used in Example 1) as the oil holding layer was adopted. The condition for heat pressing between the surface layer and the oil holding layer was a temperature of 80°C, a pressure of 0.1 MPa, and a press time of 30 sec.

(Comparative Examples)

As Comparative Example 1, an oil collecting mat was adopted having the hydrophilic PP non-woven fabric before heat pressing as the oil absorber, as used in Example 1. As Comparative Example 2, an oil removing mat (manufactured by 3M: 3M™ Oil Removing Mat M-RGC36100E) was adopted. As Comparative Example 3, "Grippy Mat" manufactured by New Pig Corporation was adopted.

(Smoothness and Air Resistance)

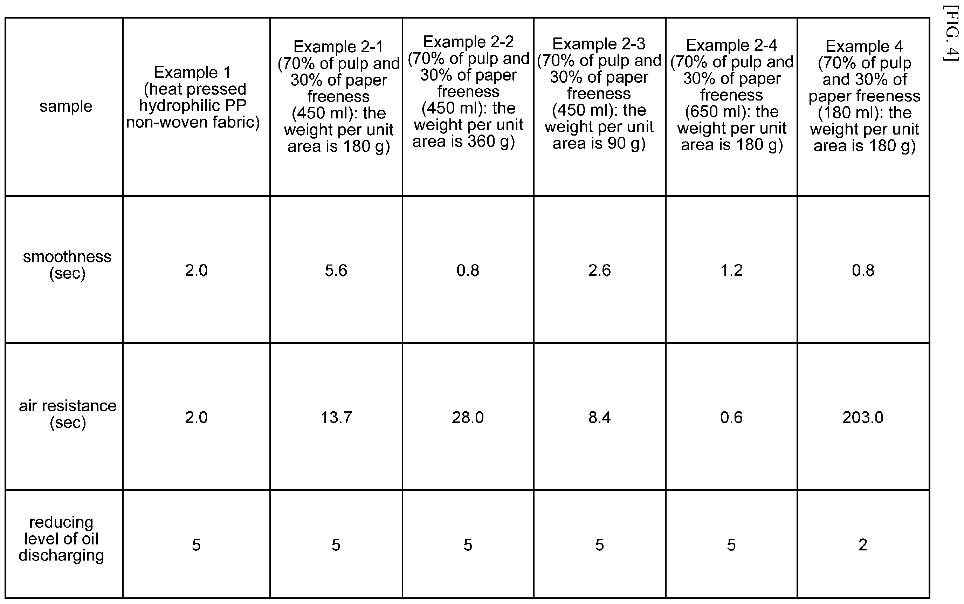

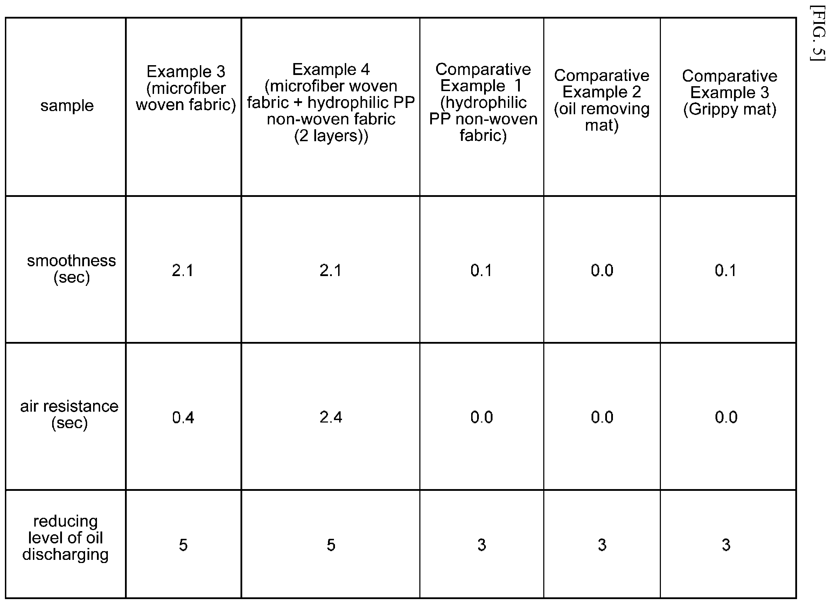

For each Examples and Comparative Examples, the smoothness was measured on the basis of JIS P 8155. Then, for each Examples and Comparative Examples, the air resistance was measured on the basis of JIS P 8117. The measurement results are shown in Fig. 4 and Fig. 5.

(Reducing Level of Oil Discharging and Reducing Level of Oil Reversing)

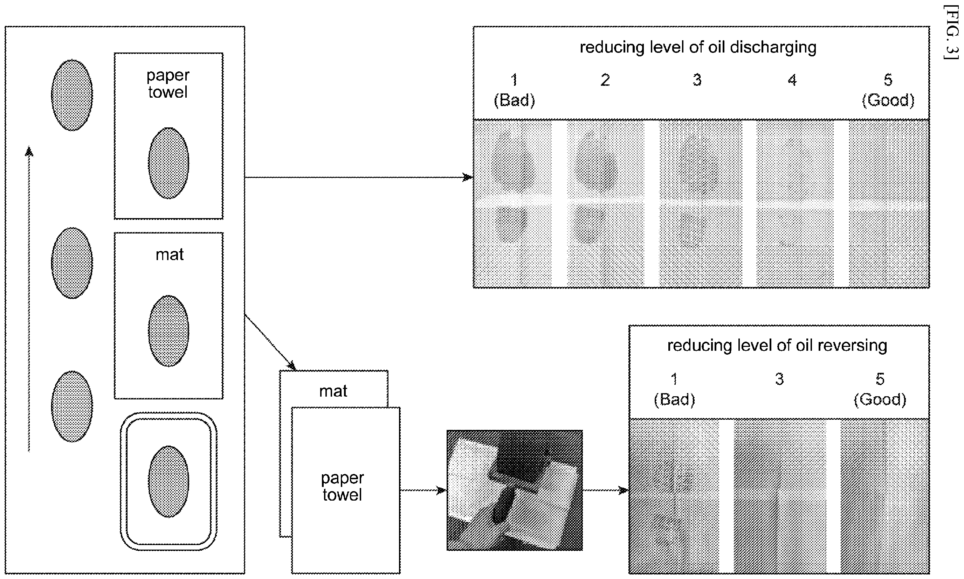

By using the method as shown in Fig. 3, the reducing level of oil discharging was measured for each Examples and Comparative Examples, and the reducing level of oil reversing was measured for Examples 1, 2 and Comparative Examples 1, 2, and 3. Firstly, an oil supplying tray including oil, the oil-absorbing mat for the evaluation, and a paper towel were arranged in this order. Then, a walker wearing an anti-slipping long boots for kitchen adhered the oil on the shoe sole of the boots in the oil supplying tray, walked on the oil-absorbing mat, and then walked on the paper towel. After that, the reducing level of oil discharging was evaluated in 5 grades by determining the degree of oil absorbing in the paper towel from visual inspection. Further, the reducing level of oil reversing was evaluated in 5 grades by overlaying a new paper towel on the oil-absorbing mat, pressing with a 15 kg roller, and determining the degree of oil absorbing in the paper towel from visual inspection. The evaluation results are shown in Figs. 4-6.

(Measurement of Thickness under Compression)

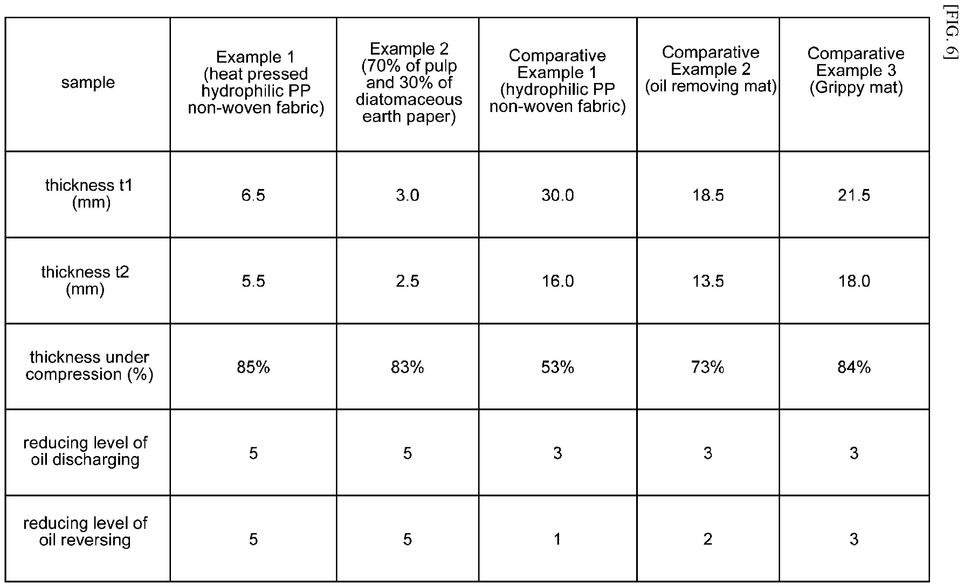

When the stacking sample obtained by stacking ten test specimens of the oil absorber has a thickness t1 before compression and a thickness t2 under pressure of 14,700 N/m, the thickness under compression was calculated by the following equation (1). The thickness under compressions were measured for Examples 1,2 and Comparative Examples 1,2, and 3. The measurement results are shown in Fig. 6.

$$\text{Thickness under compression (\%)} = (t2 / t1) * 100 \quad \ldots (1)$$

(Measurement of Durability of Oil Absorbency)

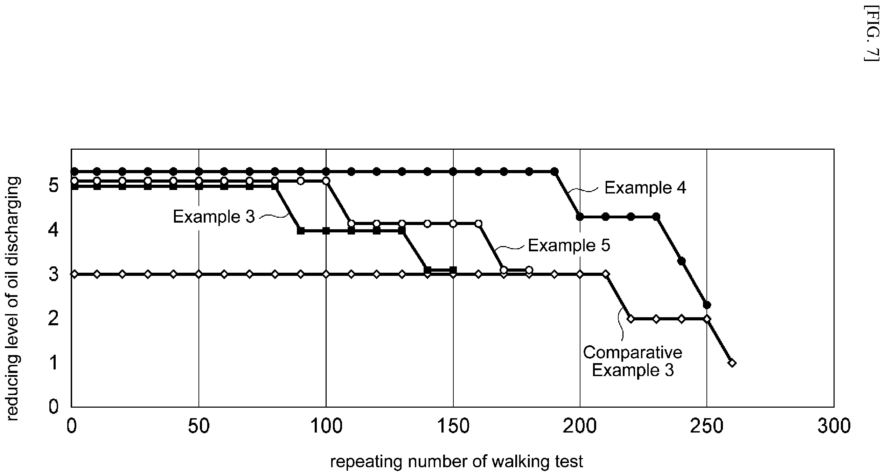

For Examples 3, 4 and Comparative Example 3, the repeating number and the degree of reducing level of oil discharging were measured by performing the measurement of the reducing level of oil discharging as described above repeatedly. Further, as Example 5, an oil-absorbing mat by adopting the paper of Example 2 as the oil holding layer according to the third conformation was prepared. The durability of oil absorbency was measured for Example 5. The measurement results are shown in Fig. 7.

(Evaluation)

As shown in Fig. 4 and Fig. 5, for Examples 1 to 4, all smoothness was 0.8 s or more and all air resistance was 28 s or less. Then, the reducing level of oil discharging of Examples 1 to 4 was all evaluated as 5. On the other hand, at least one of the conditions of the smoothness and the condition of the air resistance was not satisfied in Comparative Examples 1 to 4. Then, the reducing level of oil discharging of Comparative Examples 1 to 4 was all evaluated as 3 or less. The evaluation confirms that the absorbency of oils can be improved and the oil discharging can be reduced by satisfying the above-described conditions of the smoothness and the air resistance.
As shown in Fig. 6, the thickness under compression of Examples 1 and 2 were both 83% or more. Therefore, the reducing level of oil reversing was all evaluated as 5. On the other hand, for Comparative Example 1, the thickness under compression was smaller than 75%, and the reducing level of oil reversing was evaluated as 1. However, for Comparative Example 2, although the thickness under compression was slightly smaller than 75%, the reducing level of oil reversing was evaluated as 2. It was confirmed that at least Comparative Example 2 has an improved reducing level of oil reversing compared to that of Comparative Example 1. In terms of this confirmation, it is understood that the effect of improving the reducing level of oil reversing is provided when the thickness under compression is 75% or more. Although the thickness under compression of Comparative Example 3 was 84%, the reducing level of oil discharging was low, that is evaluated as 3, and thereby the reducing level of oil reversing was evaluated as 3.
As shown in Fig. 7, Examples 1, 4, and 5 were all evaluated as 5 and has sufficient reducing level of oil discharging when the repeating number is low. For Example 3 being solely composed of the woven fabric by using the microfiber as the oil absorber, the reducing level of oil discharging was decreased before the repeating number became 100. Next, for Example 5 by adopting the paper including diatomaceous earth as the oil holding layer, the reducing level of oil discharging was decreased when the repeating number was beyond about 150. For Example 4 by adopting the hydrophilic PP non-woven fabric as the oil holding layer, the reducing level of oil discharging was decreased after the repeating number became near 200. In summary, it is understood that the durability of oil absorbency can be improved by adopting the conformation of Example 4.

[Second Embodiment]

The second embodiment of the present invention obtained by changing the conformation of the first embodiment will be described. For the component as previously described in the first embodiment, the overlapping description will be omitted.
The oil-absorbing mat 1 according to the second embodiment also comprises the oil absorber 2 which is provided on the upper surface of the oil-absorbing mat 1 and absorbs the oil; and the permeation preventing layer 3 which is provided on the floor surface of the oil-absorbing mat 1 and prevents the permeation of the oil, as shown in Fig. 1 and Fig. 2. The details of the permeation preventing layer 3 is as shown in the first embodiment.
The oil absorber 2 may have a smoothness of 0.3 s or more, and more preferably 0.7 s or more, as measured on the basis of JIS P 8155.
The oil absorber 2 may have an air resistance (Oken Type) of 28 s or less, and more preferably 14 s or less as measured on the basis of JIS P 8117. When the air resistance of the oil absorber 2 is low so as to satisfy the above-described value, the oil collected on the surface of the oil absorber 2 is rapidly absorbed inside the oil absorber 2.
Then, the oil absorber 2 is a member containing 34% by mass or more, and more preferably 65% by mass of a fiber having a diameter of 0.3 to 20 micrometers. Since the fiber diameter is sufficiently small, the surface area of the fiber in which the oil is absorbed is large compared to the volume. Then since the space between fibers is small, the absorption of the oil inside the oil absorber 2 due to capillarity phenomenon is carried out rapidly.
Next, the specific conformation of the oil absorber 2 having the above-described properties will be described. Hereinafter, based on the general structure difference, the oil absorber 2 will be described by categorizing into a fourth conformation, a fifth conformation, a sixth conformation, and a seventh conformation. However, each conformation may satisfy at least the above-described conditions of the smoothness and the air resistance, and each conformation does not have to satisfy properties of the less deformability necessarily.

(Fourth Conformation)

The fourth conformation of the oil absorber 2 has a conformation as shown in Fig. 2(a). Then, the oil absorber 2 is composed of the third non-woven fabric having a fiber diameter of 2 to 10 micrometers. The oil absorber 2 contains 65% or more of a fiber having a diameter of 2 to 10 micrometers. Since the space between fibers of the oil absorber 2 is sufficiently small, the oil absorber 2 has high smoothness while limiting the air resistance to a certain value. Since the fiber the oil absorber 2 has a dense structure, the oil absorber 2 is hard to be deformed. The oil absorber 2 is obtained by heat pressing a non-woven fabric. For example, the press temperature was set to be from 80 to 100°C, the oil absorber may be pressed at a pressure of 0.1 to 5 MPa for 30 to 180 sec. For example, the material of the third non-woven fabric may be PP, PET, rayon, wool, nylon, acryl, vinylon, or aramid fiber and the like. The weight per unit area of the third non-woven fabric may be from 100 to 1,200 g/m$^2$. The thickness of the oil absorber 2 according to the fourth conformation may be from 0.2 to 3.0 mm. Hydrophilization treatment may be performed on the third non-woven fabric with a reagent including a surfactant.

(Fifth Conformation)

The fifth conformation of the oil absorber 2 is disposed of a fourth non-woven fabric having a conformation as shown in Fig. 2(a). Further, the fourth non-woven fabric may contain from 10 to 50% by mass of a porous oil absorbing particle having a diameter of 5 to 30 micrometers. More preferably, the fourth non-woven fabric may contain from 25 to 35% by mass of the porous oil absorbing particle. Diatomaceous earth, pearlite, a calcium silicate particle, an activated carbon, or plum charcoal may be used as the porous oil absorbing particle. The weight per unit area of the oil absorber 2 according to the fifth conformation may be from 90 to 360 g/m$^2$. The freeness of the oil absorber 2 according to the fifth conformation may be from 450 to 650 ml. The thickness of the oil absorber 2 according to the fifth conformation may be from 0.2 to 1.0 mm.

(Sixth Conformation)

The sixth conformation of the oil absorber 2 is disposed of a non-woven fabric or a knitted fabric containing 34% by mass or more of a micro fiber having a diameter of 2 to 20 micrometers having a conformation as shown in Fig. 2(a). More preferably, the oil absorber 2 may be a knitted fabric containing 65% by mass or more of a micro fiber. Containing more microfiber nearer 100 wt% as possible is preferred. An ultrafine fiber may be a nylon fiber, a polyester fiber, an acrylic fiber, a polyolefin fiber, or a pulp. The weight per unit area of the oil absorber 2 according to the sixth conformation may be from 75 to 220 g/m$^2$. The thickness of the oil absorber 2 according to the sixth conformation may be from 0.2 to 1.0 mm.

(Seventh Conformation)

The seventh conformation of the oil absorber 2 has a conformation as shown in Fig. 2(b). The oil absorber 2 comprises a surface layer 4 for preserving the surface of the oil absorber; and an oil holding layer 5 for holding the oil permeating through the surface layer 4, the oil holding layer 5 being provided beneath the surface layer 4. The surface layer 4 may be a knitted fabric containing 35% by mass or more of a fiber having a diameter of 2 to 20 micrometers. More preferably, the surface layer 4 may be a knitted fabric containing 65% by mass or more of a microfiber. Containing more micro fiber nearer 100 wt% as possible is preferred. In the surface layer 4, the microfibers may be in form of the assembled fibers, and the fiber diameter of the assembled fibers may be from 84 to 160 dtex. The number of the microfibers contained in one of the assembled fibers may be from 264 to 1,152. Further, the material such as PET, nylon or PP may be adopted as the material of the microfiber. For example, the material of the microfiber may be 35% of nylon and 65% of polyester. Further, the weight per unit area of the surface layer 4 may be from 100 to 400 g/m$^2$. The thickness of the surface layer 4 may be from 0.3 to 0.5 mm.
The oil holding layer 5 is as described in the first embodiment except that the thickness may be from 1.5 to 10.0 mm.
Next, the action and effect of the oil-absorbing mat 1 according to the embodiment will be described.

In the oil-absorbing mat 1, the oil absorber 2 contains

34% by mass or more of a fiber having a diameter of 0.3 to 20 micrometers. By the conformation, further oil can be transferred from the shoe sole to the oil absorber 2. Further, the oil absorber 2 has an air resistance (Oken Type) of 28 s or less as measured on the basis of JIS P 8117. By having low air resistance, the oil absorber 2 can absorb the oil collected from the shoe sole and permeate the oil inside the oil absorber. Thus, by satisfying both conditions suitable for the fiber diameter and the air resistance of the oil absorber 2, the absorbency of oils can be improved and the oil discharging can be reduced.
In the oil-absorbing mat 1, the oil absorber 2 comprises a surface layer 4 for preserving the surface of the oil absorber; and an oil holding layer 5 for holding the oil permeating through the surface layer 4, the oil holding layer 5 being provided beneath the surface layer 4. Since the oil absorber 2 comprises the surface layer 4 for preserving the surface based on the conformation, the durability of the oil absorber 2 can be improved. Further, since the oil absorber 2 comprises the oil holding layer 5 inside the surface layer 4, the durability of oil absorbency can be prolonged.

In the oil-absorbing mat 1, the fiber diameter of the oil absorber 2 is from 2 to 10 micrometers, and the oil absorber 2 is obtained from the first non-woven fabric compressed, for example, by heat pressing. The first non-woven fabric contains 65% or more of a fiber having a diameter of 2 to 10 micrometers, and the first non-woven fabric has a weight per unit area of 140 to 1,200 g/m². According to the conformation, the above-described conditions of the smoothness and the air resistance can be satisfied. Essentially, if the smoothness is improved, then the air resistance is increased. However, according to the conformation, the smoothness can be increased and the air resistance can be decreased. Then, since the space between fibers is small, re-adhering the absorbed oil can be prevented.

In the oil-absorbing mat 1, the oil absorber 2 is composed of a second non-woven fabric containing a fiber formed from a pulp. According to the conformation, the above-described conditions of the smoothness and the air resistance can be satisfied. Essentially, if the smoothness is improved, then the air resistance is increased. However, according to the conformation, the smoothness can be increased and the air resistance can be decreased.

In the oil-absorbing mat 1, the second non-woven fabric contains from 10 to 50% by mass of a porous oil absorbing particle having a diameter of 5 to 30 micrometers. According to the conformation, the oil absorbency can be improved.

In the oil-absorbing mat 1, the surface layer 4 is a woven fabric containing 34% by mass or more of a fiber having a diameter of 5 to 20 micrometers. By including more than a certain amount of the fine fiber, the surface can be preserved and the smoothness of the surface can be improved.

Note that the present invention is not limited to the above-described embodiments. For example, any conformation other than the first conformation, the second conformation and the third conformation can be adopted as long as the above-described conditions of the smoothness and the air resistance can be satisfied.

EXAMPLES

Next, the examples of the present invention will be described. However, the present invention is not limited to the examples.

(Example 6)

As Example 6, an oil-absorbing mat by applying the oil absorber according the above-described "Fourth Conformation" was prepared. In this Example, the heat pressed hydrophilic PP non-woven fabric (manufactured by 3M: 3M™ Chemical Sorbent P-110) as listed in the first embodiment was adopted as the oil absorber.

(Example 7)

As Example 7, an oil-absorbing mat by applying the oil absorber according the above-described "Fifth Conformation" was prepared. In this example, a non-woven fabric (paper) containing 70% by mass of a pulp having a fiber diameter of 16 micrometers (actual measured average diameter) as the fiber and 30% by mass of diatomaceous earth was adopted. In Example 7, the freeness of the oil absorber was 550 ml. In Example 7, a regenerated pulp was used as a pulp.

(Example 8-1)

As Example 8-1, an oil-absorbing mat by applying the oil absorber according the above-described "Sixth Conformation" was prepared. An oil-absorbing mat by adopting an oil absorber being composed of a knitted fabric by using a microfiber having a fiber diameter of 2 to 20 micrometers (manufactured by KURARAY CO., LTD.: DB060) was prepared. The material of the microfiber was 35% of nylon and 65% of polyester. The weight per unit area was 220 g/m².

(Example 8-2)

As Example 8-2, an oil-absorbing mat by adopting an oil absorber being solely composed of a knitted fabric by using two types of microfibers having a fiber diameter of 2 to 20 micrometers (manufactured by KURARAY CO., LTD.: KT15191) was prepared. In this example, the fiber diameter of one of the assembled fibers of the microfibers was 84 dtex, and the number of the microfibers contained in one of the assembled fibers was 264. Further, the fiber diameter of the other of the assembled fibers of the microfibers was 84 dtex, and the number of the microfibers contained in one of the assembled fibers was 144. Further, the material of the microfiber was 12% of nylon and 88% of polyester. The weight per unit area was 200 g/m².

(Example 8-3)

As Example 8-3, an oil-absorbing mat by adopting an oil absorber being composed of a non-woven fabric by using a microfiber having a fiber diameter of 2 to 20 micrometers (manufactured by KURARAY CO., LTD.: B00C0C) was prepared. In this example, the fiber diameter of the assembled fibers of the microfibers was 84 dtex, and the number of the microfibers contained in one of the assembled fibers was 264. Further, the material of the microfiber was 14% of nylon and 86% of polyester. The weight per unit area was 125 g/m$^2$.

(Example 8-4)

As Example 8-4, an oil-absorbing mat by adopting an oil absorber being composed of a non-woven fabric by using a microfiber having a fiber diameter of 0.3 to 12 micrometers (manufactured by SANWA SEISHI Co., Ltd.: NA93075) was prepared. The fibers as the components of the non-woven fabric were 26% of an acrylic split type fiber, 37% of an acrylic fiber having a fiber diameter of 0.4 dtex, 22% of a rayon fiber having a fiber diameter of 1.1 dtex, and 15% of a polyester fiber having a fiber diameter of 1.7 dtex. The weight per unit area was 75 g/m$^2$.

(Example 9)

As Example 9, an oil-absorbing mat by adopting the oil absorber according the above-described "Seventh Conformation" was prepared. In this example, the oil absorber was the oil absorber as listed as Example 4 of the first embodiment.

(Comparative Examples)

As Comparative Example 5, the oil collecting mat used in Comparative Example 1 of the first embodiment was adopted. As Comparative Example 6, the oil removing mat (manufactured by 3M: 3M™ Oil Removing Mat M-RGC36100E) as used in Comparative Example 2 of the first embodiment was adopted. As Comparative Example 7, "Grippy Mat" manufactured by New Pig Corporation as used in Comparative Example 3 of the first embodiment was adopted. As Comparative Example 8, an oil-absorbing mat comprising a spun lace non-woven fabric being composed of a rayon fiber having a fiber diameter of 12 micrometers (manufactured by KURARAY CO., LTD.: JP5395) as the oil absorber was adopted. The weight per unit area of the oil absorber was 100 g/m$^2$. As Comparative Example 9, an oil-absorbing mat comprising a spun lace non-woven fabric being composed of a rayon fiber having a fiber diameter of 11 micrometers and a pulp fiber (manufactured by SANWA SEISHI Co.,Ltd.: NR93080) as the oil absorber was adopted. The weight per unit area of the oil absorber was 80 g/m$^2$. As Comparative Example 10, an oil-absorbing mat comprising a tricot knitted fabric being composed of a polyester fiber having a fiber diameter of 30 micrometers (manufactured by KB SEIREN, LTD.: KP570) as the oil absorber was adopted. The weight per unit area of the oil absorber was 110 g/m$^2$. As Comparative Example 11, an oil-absorbing mat comprising a needle-punched non-woven fabric being composed of a polypropylene fiber having a fiber diameter of 18 to 50 micrometers and a polypropylene-polyethylene core-sheath fiber (3M: 3M™ Basic Mat) was adopted.

(Smoothness and Air Resistance)

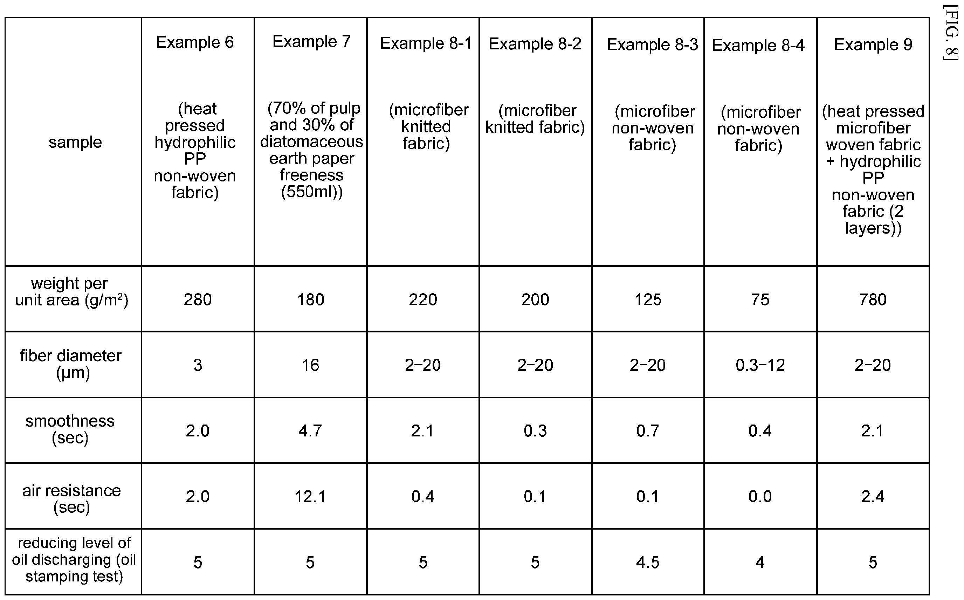

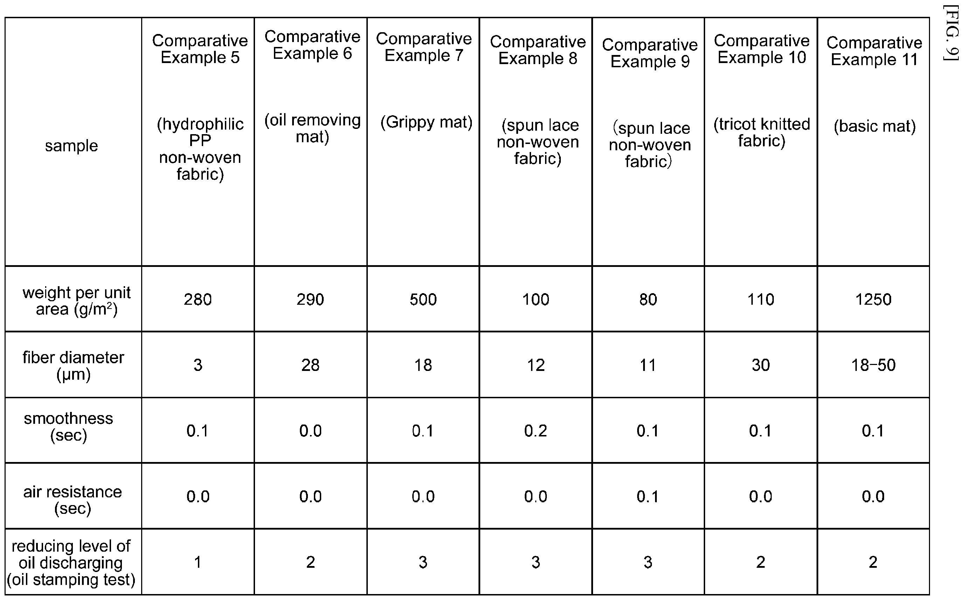

As similar to the first embodiment, for each Examples and Comparative Examples, the smoothness and the air resistance were measured. The measurement results are shown in Fig. 8 and Fig. 9.

(Reducing Level of Oil Discharging)

By using the oil stamping test as shown below, the reducing level of oil discharging was measured for each Examples and Comparative Examples.
A non-woven fabric sheet (manufactured by Asahi Kasei Corporation, BEMCOT (R) M-1) was folded in four, 3g of canola oil was applied and absorbed on the sheet homogeneously. The oil supplying tray in which the sheet was displaced on a plastic tray, a stamp for the evaluation in which a rubber plate (length 20 mm and width 20 mm) was adhered to one surface of a cubic weight (the mass is 4 kg) were prepared.
The oil supplying tray, the oil-absorbing mat for the evaluation, and a Japanese writing paper for calligraphy were arranged in this order. Then the stamp for the evaluation was displaced on the non-woven fabric sheet in the oil supplying tray for 1 sec and applied on the rubber plate, and then displaced on the oil-absorbing mat for the evaluation for 1 sec to absorb the oil on the rubber plate. After that, the stamp for the evaluation was displaced on a Japanese writing paper for calligraphy for 1 sec to absorb the resulting oil on the rubber plate in the Japanese writing paper. The oily dirt generated in the Japanese writing paper for calligraphy was determined by visual inspection according to the following evaluation standards.

> 1: Terrible oily dirt was generated by a large amount of oil was generated.
> 2: Clear oily dirt was generated in all area of the rubber plate.
> 3: Light oily dirt was generated, or the oily dirt was partly generated in the area of the rubber plate.
> 4: Slight oily dirt was generated, or the visible oily dirt was generated only when the paper was carefully inspected.
> 5: Very slight oily dirt was generated, or no oily dirt was inspected visually.

The evaluation results are shown in Fig. 8 and Fig. 9.

(Evaluation)

As shown in Fig. 8 and Fig. 9, all smoothness was 0.3 s or more and all air resistance was 28 s or less for Examples 6 to 9. Then, the reducing level of oil discharging of Examples 6 to 9 was all evaluated as 4 or more. On the other hand, the condition of the smoothness was not satisfied in Comparative Examples 5 to 11. Then, the reducing level of oil discharging of Comparative Examples 5 to 11 was all evaluated as 3 or less. The evaluation confirms that the absorbency of oils can be improved and the oil discharging can be reduced by satisfying the above-described conditions of the smoothness and the air resistance.

[Third Embodiment]

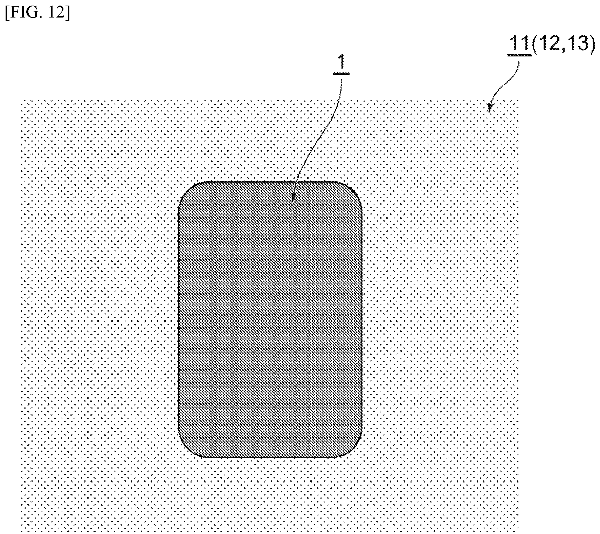

The third embodiment of the present invention will be described. As shown in Fig. 12, the third embodiment is a high viscosity inhibitor of oil 11 for inhibiting the increase of the viscosity of oil presented on a floor or oil adhered on the shoe sole by spraying on a floor around the disposed oil-absorbing mat shown in the first embodiment or the second embodiment.

In the oil-absorbing mat 1 shown in the first embodiment or the second embodiment, when the oil having increased viscosity and decreased flowability due to heating or changing over time is adhered on the shoe sole, the oil transferred from the shoe sole to the oil-absorbing mat 1 is remained on the surface of the oil-absorbing mat 1, and transferring the oil inside the oil absorber 2 is hard to occur. Therefore, the oil adhered on the shoe sole becomes hard to be absorbed sufficiently. Further, when the high viscosity oil transferred from the shoe sole is remained on the surface of the oil-absorbing mat 1, if a walker wearing a shoe without adhering any oil is walking on the oil-absorbing mat 1, the oil on the surface of the oil-absorbing mat 1 is retransferred on the shoe sole, and the function of the oil-absorbing mat can not be exerted sufficiently. Therefore, there is a need for inhibiting the increase of the viscosity of oil presented on a floor or oil adhered on the shoe sole.

The high viscosity inhibitor of oil comprises from 0.1 to 2% by mass of anti-oxidant and 97% by mass or more of water.

The anti-oxidant 12 inhibits the oxidation of the oil and prevents the viscosity of the oil from increasing. By inhibiting the increase of the viscosity of oil and maintaining the flowability of oil, the oil transferred from the shoe sole to the surface of the oil-absorbing mat 1 is absorbed in the oil absorber 2 without remaining on the surface of the oil-absorbing mat 1. As the anti-oxidant 12, for example, vitamin E, butyl hydroxytoluene (BHT), butyl hydroxyanisole (BHA), or propyl gallate can be used. The anti-oxidant can be used alone, or two or more mixture can be used.

The high viscosity inhibitor of oil 11 can contain 1% by mass or less of a surfactant 13. Containing the surfactant 13 can improve the solubility the lipophilic vitamin E in water. As the surfactant 13, for example, lauryl glucoside or sodium lauryl sulfate can be used. The surfactant can be used alone, or two or more mixture can be used.

Further, the high viscosity inhibitor of oil 11 can contain a thickner, a preservative, a washing aid, an anti-foaming agent, a germicide, an anti-bacterial agent, a disinfectant, or a perfume.

The high viscosity inhibitor of oil 11 is used by spraying on a floor around the disposed oil-absorbing mat 1. The high viscosity inhibitor of oil 11 may be used by spraying on the oil-absorbing mat 1 directly. Depending on the disposed place for an apparatus handling oils such as a fryer, for example, a range of 10 m or 20 m from the disposed place of the oil-absorbing mat 1 including the disposed place of the apparatus handling oils; or a certain area having the disposed place of the oil-absorbing mat 1 as a gate (more specifically, a kitchen or a backyard) may be as the floor around the disposed oil-absorbing mat 1. By spraying the high viscosity inhibitor of oil 11 within a certain area having the apparatus handling oils and the oil-absorbing mat 1, the high viscosity inhibitor of oil 11 is sprayed in the area that adhering oils on the floor is expected.

Spraying the high viscosity inhibitor of oil 11 can be performed by a device such as a hand sprayer, a nebulizer, or a sprinkler. By using the device, the high viscosity inhibitor of oil 11 can be sprayed to the area to be sprayed homogeneously, or concentrately to a certain area if necessary.

The high viscosity inhibitor of oil 11 exerts the high viscosity inhibition effect by spraying on a floor directly even if oil is presented on the floor. The anti-oxidant 12 is remained on the floor after spraying the high viscosity inhibitor of oil 11 and evaporating water. Therefore, even if oil is adhered on the floor after evaporating water of the sprayed high viscosity inhibitor of oil 11, the high viscosity inhibition effect is exerted. Accordingly, the floor surface always does not have to keep wet with the high viscosity inhibitor of oil 11.

As described above, by spraying the high viscosity inhibitor of oil 11 on the floor surface, the oil on the floor surface can be prevented from oxidizing and increasing the viscosity, and thereby the oil absorbency of the oil-absorbing mat 1 can be maintained to a high level.

EXAMPLES

Next, the examples of the present invention will be described. However, the present invention is not limited to the examples.

(Example 11)

Four samples were prepared by adding 20 mg (1% by mass) of BHT (Wako Pure Chemical Corporation) to 2 g of an edible oil used for cooking of fried side dishes in a supermarket (used for 3 to 5 days at 160-180°C), heating and stirring the mixture at 80°C for 5 min, applying the mixture on a PET film, and then aging the film in an oven at 80°C for 14 hours.

(Example 12)

Four samples were prepared by adding 20 mg (1% by mass) of BHT (Wako Pure Chemical Corporation) to 2 g of the edible oil used in Example 11, heating and stirring the mixture at 80°C for 5 min, applying the mixture on a PET film, and then aging the film in an oven at 80°C for 14 hours.

(Example 13)

Four samples were prepared by adding 20 mg (1% by mass) of vitamin E (Wako Pure Chemical Corporation) to 2 g of an edible oil used for cooking of fried foods in a restaurant (used for 3 to 5 days at 160-180°C), heating and stirring the mixture at 80°C for 5 min, applying the mixture on a PET film, and then aging the film in an oven at 80°C for 14 hours.

(Example 14)

Four samples were prepared by adding 10 mg (0.5% by mass) of vitamin E (Wako Pure Chemical Corporation) to 2 g of the edible oil used in Example 11, heating and stirring the mixture at 80°C for 5 min, applying the mixture on a PET film, and then aging the film in an oven at 80°C for 14 hours.

(Example 15)

Four samples were prepared by adding 5 mg (0.25% by mass) of vitamin E (Wako Pure Chemical Corporation) to 2 g of the edible oil used in Example 11, heating and stirring the mixture at 80°C for 5 min, applying the mixture on a PET film, and then aging the film in an oven at 80°C for 14 hours.

(Example 16)

Three samples were prepared by adding 2 mg (0.1% by mass) of vitamin E (Wako Pure Chemical Corporation) to 2 g of the edible oil used in Example 11, heating and stirring the mixture at 80°C for 5 min, applying the mixture on a PET film, and then aging the film in an oven at 80°C for 14 hours.

(Example 17)

Firstly, an aqueous solution of vitamin E was prepared. Two grams of vitamin E (Wako Pure Chemical Corporation) was added to 200 ml of 0.1% aqueous solution of a surfactant (KAO MYDOL 12) and mixed. The solubilized amount of vitamin E was measured as 1% as measured after collecting the solution and evaporating water in an oven at 80°C for 1 hour or longer. Four samples were prepared by applying 2 g of the edible oil used in Example 11 on a PET film, spraying 0.5 g of the aqueous solution of vitamin E, and then aging the film in an oven at 80°C for 14 hours.

(Comparative Examples)

As Comparative Example 12, four samples were prepared by applying an edible oil used for cooking of fried side dishes in a supermarket (used for 3 to 5 days at 160-180°C) on a PET film, and then aging the film in an oven at 80°C for 14 hours. Further, as Comparative Example 13, four samples were prepared by applying an edible oil used for cooking of fried foods in a restaurant (used for 3 to 5 days at 160-180°C) on a PET film, and then aging the film in an oven at 80°C for 14 hours.

(Measurement of Viscosity)

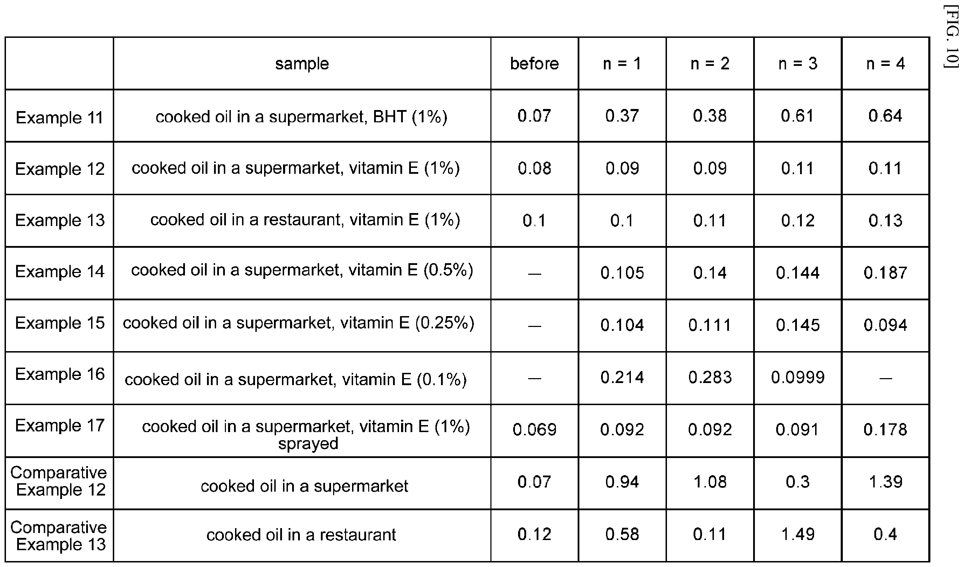

An oil drop collected from each samples (about 0.1 ml) was loaded on a plate of a viscometer (manufactured by Thermo SCIENTIFIC, HAAKE RheoStress 1), kept it at 25°C for 30 sec, and measured the plate with a cone-shaped plate (HC20/1-TiL 0.01020, diameter 20 mm, angle 1°) at 100 Hz. The measurement results are shown in Fig. 10.

(High Viscosity Inhibition Test in Kitchen)

In a business-use kitchen, the high viscosity inhibition effect was confirmed by spraying the high viscosity inhibitor of oil.

Preparation and Spraying of the High Viscosity Inhibitor of Oil.

Three grams of vitamin E was added to 1 L of 0.1% by mass aqueous solution of MYDOL 12 (KAO Corporation) and dissolved while stirring.

(Example 18)

The prepared high viscosity inhibitor of oil was sprayed on a part of the floor of the cleaned kitchen with a hand sprayer at a frequency of 3 times/day for 6 days. The sprayed amount of each spraying operation was 40 g/m$^2$. One time per one day, by using a paper towel immersing 3 ml of IPA (KURARAY, Microfiber Glass Cloth DB60), samples were collected by wiping two places of the floor in a kitchen in which the high viscosity inhibitor of oil was sprayed (Place A and Place B), and one place in the same kitchen in which the high viscosity inhibitor of oil was not sprayed (Place C). Note that samples were collected in an area of 20 cm x 30 cm which was enclosed in a masking tape.

(Comparative Example 14)

As Comparative Example, in the kitchen used in Example 18, after cleaning, without spraying the high viscosity inhibitor of oil, one time per one day, samples were collected by wiping the above-described three places in the kitchen by using the paper towel immersing 3 ml of IPA (KURARAY, Microfiber Glass Cloth DB60). The places in which samples were collected were the same places as in Example 18 (Place A, Place B, and Place C).

(Measurement of Oil Composition)

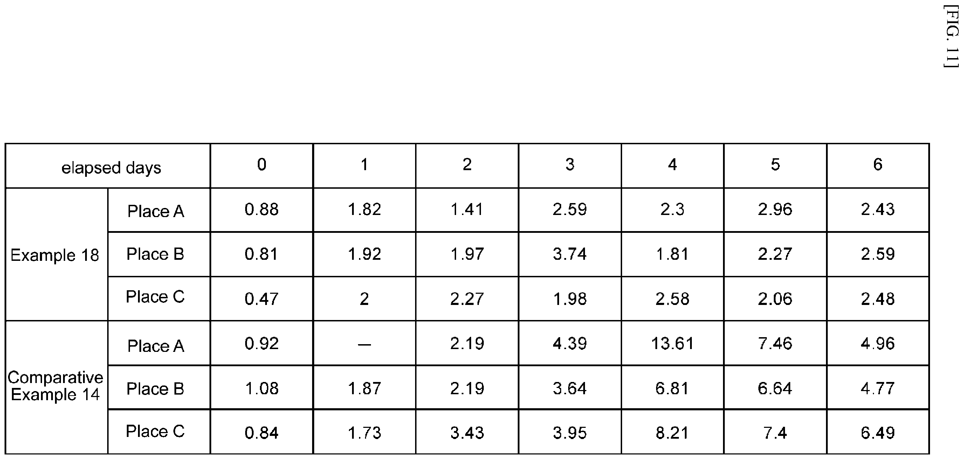

For samples of Example 18 and Comparative Example 14, the oil absorbed in the paper towel was extracted with 80 ml of acetone and filtered. The used flask was washed with an additional 30 ml of acetone and filtered. The filtrated liquid was concentrated under reduced pressure to obtain an extracted liquid. The extracted liquid was dissolved with 0.1% THF solution, and measured by using a high performance liquid chromatograph (Agilent Technologies 1200 series) equipped with an RI detector. The measurement was performed at 40°C at a flow speed of 1.0 ml/min by using a PLgel 5 $\mu$l Guard column 50 x 7.5 mm and 2 x PLgel Mixed - D 20 $\mu$m 300 x 7.5 mm column. The composition of the extract was determined by the peak areas in a GPC chart. The change of the measured amount of the polymerized oil is shown in Fig. 11.

As shown in Fig. 10, each sample in which aging treatment was performed by adopting the anti-oxidant and the high viscosity inhibitor of oil inhibited the increase of the viscosity, compared to Comparative Examples in which aging treatment was performed without adopting these reagents. In particular, when vitamin E was used as the anti-oxidant, the strong effect was observed.

Further, as shown in Fig. 11, in Example 17 adopting the high viscosity inhibitor of oil, not only the inhibition of the increase of the viscosity in the sprayed area of the high viscosity inhibitor of oil but also the inhibition effect of the increase of the viscosity in the non-sprayed area were observed. On the other hand, in Comparative Example 14 adopting the high viscosity inhibitor of oil, the increase of the viscosity was observed.

In summary, the high viscosity inhibitor of oil according to the third embodiment exerts the inhibition effect of the increase of the viscosity sufficiently. Accordingly, by spraying on a floor around the disposed oil-absorbing mat shown in the first embodiment or the second embodiment, the increase of the viscosity of the oil, that is, the decrease of the flowability is inhibited, and thereby the oil absorbed on the shoe sole can be absorbed in the oil-absorbing mat certainly.

[Description of the Reference Numbers]

1 Oil-absorbing mat,
2 Oil absorber,
3 Permeation preventing layer,
4 Surface layer,
5 Oil holding layer

**Claims**

1.  An oil-absorbing mat for absorbing oil, the oil-absorbing mat being disposed on a floor, the oil-absorbing mat comprising:

    an oil absorber for absorbing the oil, the oil absorber being provided on the upper surface of the oil-absorbing mat; and
    a permeation preventing layer for preventing the permeation of the oil, the permeation preventing layer being provided on the floor surface of the oil-absorbing mat;
    wherein the oil absorber has
    a smoothness of 0.8 s or more as measured on the basis of JIS P 8155; and
    wherein the oil absorber has an air resistance (Oken Type) of 28 s or less as measured on the basis of JIS P 8117.

2.  The oil-absorbing mat according to Claim 1, wherein the thickness under compression as shown in the following equation (1) is 75% or more when the stacking sample obtained by stacking ten test specimens of the oil absorber has a thickness t1 before compression and a thickness t2 under pressure of 14,700 N/m$^2$:

$$\text{Thickness under compression } (\%) = (t2 / t1)*100 \ldots(1)$$

3.  The oil-absorbing mat according to Claim 1 or 2, wherein the oil absorber comprises a surface layer for preserving the surface of the oil absorber; and an oil holding layer for holding the oil permeating through the surface layer, the oil holding layer being provided beneath the surface layer.

4.  The oil-absorbing mat according to Claim 1 or 2, wherein the oil absorber contains 65% or more of a fiber having a diameter of 2 to 10 micrometers, and the oil absorber is composed of a first non-woven fabric having a weight per unit area of 140 to 1,200 g/m$^2$.

5.  The oil-absorbing mat according to Claim 1 or 2, wherein the oil absorber is composed of a second non-woven fabric containing a fiber formed from a pulp.

6.  The oil-absorbing mat according to Claim 5, wherein the second non-woven fabric contains from 10 to 50% by mass of a porous oil absorbing particle having a diameter of 5 to 30 micrometers.

7.  The oil-absorbing mat according to Claim 3, wherein the surface layer is a woven fabric containing 34% by mass or more of a fiber having a diameter of 5 to 20 micrometers.

8.  An oil-absorbing mat for absorbing an oil, the oil-absorbing mat being disposed on a floor, the oil-absorbing mat comprising:

an oil absorber for absorbing the oil, the oil absorber being provided on the upper surface of the oil-absorbing mat; and

a permeation preventing layer for preventing the permeation of the oil, the permeation preventing layer being provided on the floor surface of the oil-absorbing mat;

wherein the oil absorber contains

34% by mass or more of a fiber having a diameter of 0.3 to 20 micrometers;

wherein the oil absorber has a smoothness of 0.3 s or more as measured on the basis of JIS P 8155; and

wherein the oil absorber has an air resistance (Oken Type) of 28 s or less as measured on the basis of JIS P 8117.

9.  The oil-absorbing mat according to Claim 8, wherein the oil absorber comprises a surface layer for preserving the surface of the oil absorber; and an oil holding layer for holding the oil permeating through the surface layer, the oil holding layer being provided beneath the surface layer.

10. The oil-absorbing mat according to Claim 8, wherein the oil absorber contains 65% or more of a fiber having a diameter of 2 to 10 micrometers, and the oil absorber is composed of a third non-woven fabric having a weight per unit area of 100 to 1,200 g/m$^2$.

11. The oil-absorbing mat according to Claim 8, wherein the oil absorber is composed of a fourth non-woven fabric containing a fiber formed from a pulp.

12. The oil-absorbing mat according to Claim 11, wherein the fourth non-woven fabric contains from 10 to 50% by mass of a porous oil absorbing particle having a diameter of 5 to 30 micrometers.

13. The oil-absorbing mat according to Claim 8, wherein the oil absorber contains 65% or more of a fiber having a diameter of 2 to 20 micrometers, and the oil absorber is composed of a fifth non-woven fabric or woven fabric having a weight per unit area of 75 to 220 g/m$^2$.

14. The oil-absorbing mat according to Claim 9, wherein the surface layer is a knitted fabric containing 34% by mass or more of a fiber having a diameter of 5 to 20 micrometers.

15. A high viscosity inhibitor of oil for spraying on a floor around the disposed oil-absorbing mat according to Claim 1 or 8, comprising from 0. 1 to 2% by mass of an anti-oxidant and 97% by mass or more of water.

16. The high viscosity inhibitor of oil according to Claim 15, wherein the anti-oxidant contained in the high viscosity inhibitor of oil is vitamin E.

[FIG. 1]

[FIG. 2]

(a)

1

2
3

(b)

1

4
5
2

3

[FIG. 3]

[FIG. 4]

| sample | Example 1 (heat pressed hydrophilic PP non-woven fabric) | Example 2-1 (70% of pulp and 30% of paper freeness (450 ml): the weight per unit area is 180 g) | Example 2-2 (70% of pulp and 30% of paper freeness (450 ml): the weight per unit area is 360 g) | Example 2-3 (70% of pulp and 30% of paper freeness (450 ml): the weight per unit area is 90 g) | Example 2-4 (70% of pulp and 30% of paper freeness (650 ml): the weight per unit area is 180 g) | Example 4 (70% of pulp and 30% of paper freeness (180 ml): the weight per unit area is 180 g) |
|---|---|---|---|---|---|---|
| smoothness (sec) | 2.0 | 5.6 | 0.8 | 2.6 | 1.2 | 0.8 |
| air resistance (sec) | 2.0 | 13.7 | 28.0 | 8.4 | 0.6 | 203.0 |
| reducing level of oil discharging | 5 | 5 | 5 | 5 | 5 | 2 |

[FIG. 5]

EP 3 498 146 A1

| sample | Example 3 (microfiber woven fabric) | Example 4 (microfiber woven fabric + hydrophilic PP non-woven fabric (2 layers)) | Comparative Example 1 (hydrophilic PP non-woven fabric) | Comparative Example 2 (oil removing mat) | Comparative Example 3 (Grippy mat) |
|---|---|---|---|---|---|
| smoothness (sec) | 2.1 | 2.1 | 0.1 | 0.0 | 0.1 |
| air resistance (sec) | 0.4 | 2.4 | 0.0 | 0.0 | 0.0 |
| reducing level of oil discharging | 5 | 5 | 3 | 3 | 3 |

[FIG. 6]

| sample | Example 1 (heat pressed hydrophilic PP non-woven fabric) | Example 2 (70% of pulp and 30% of diatomaceous earth paper) | Comparative Example 1 (hydrophilic PP non-woven fabric) | Comparative Example 2 (oil removing mat) | Comparative Example 3 (Grippy mat) |
|---|---|---|---|---|---|
| thickness t1 (mm) | 6.5 | 3.0 | 30.0 | 18.5 | 21.5 |
| thickness t2 (mm) | 5.5 | 2.5 | 16.0 | 13.5 | 18.0 |
| thickness under compression (%) | 85% | 83% | 53% | 73% | 84% |
| reducing level of oil discharging | 5 | 5 | 3 | 3 | 3 |
| reducing level of oil reversing | 5 | 5 | 1 | 2 | 3 |

[FIG. 7]

[FIG. 8]

EP 3 498 146 A1

| sample | Example 6 (heat pressed hydrophilic PP non-woven fabric) | Example 7 (70% of pulp and 30% of diatomaceous earth paper freeness (550ml)) | Example 8-1 (microfiber knitted fabric) | Example 8-2 (microfiber knitted fabric) | Example 8-3 (microfiber non-woven fabric) | Example 8-4 (microfiber non-woven fabric) | Example 9 (heat pressed microfiber woven fabric + hydrophilic PP non-woven fabric (2 layers)) |
|---|---|---|---|---|---|---|---|
| weight per unit area (g/m²) | 280 | 180 | 220 | 200 | 125 | 75 | 780 |
| fiber diameter (μm) | 3 | 16 | 2-20 | 2-20 | 2-20 | 0.3-12 | 2-20 |
| smoothness (sec) | 2.0 | 4.7 | 2.1 | 0.3 | 0.7 | 0.4 | 2.1 |
| air resistance (sec) | 2.0 | 12.1 | 0.4 | 0.1 | 0.1 | 0.0 | 2.4 |
| reducing level of oil discharging (oil stamping test) | 5 | 5 | 5 | 5 | 4.5 | 4 | 5 |

[FIG. 9]

| sample | Comparative Example 5 (hydrophilic PP non-woven fabric) | Comparative Example 6 (oil removing mat) | Comparative Example 7 (Grippy mat) | Comparative Example 8 (spun lace non-woven fabric) | Comparative Example 9 (spun lace non-woven fabric) | Comparative Example 10 (tricot knitted fabric) | Comparative Example 11 (basic mat) |
|---|---|---|---|---|---|---|---|
| weight per unit area (g/m²) | 280 | 290 | 500 | 100 | 80 | 110 | 1250 |
| fiber diameter (μm) | 3 | 28 | 18 | 12 | 11 | 30 | 18–50 |
| smoothness (sec) | 0.1 | 0.0 | 0.1 | 0.2 | 0.1 | 0.1 | 0.1 |
| air resistance (sec) | 0.0 | 0.0 | 0.0 | 0.0 | 0.1 | 0.0 | 0.0 |
| reducing level of oil discharging (oil stamping test) | 1 | 2 | 3 | 3 | 3 | 2 | 2 |

[FIG. 10]

EP 3 498 146 A1

| | sample | before | n = 1 | n = 2 | n = 3 | n = 4 |
|---|---|---|---|---|---|---|
| Example 11 | cooked oil in a supermarket, BHT (1%) | 0.07 | 0.37 | 0.38 | 0.61 | 0.64 |
| Example 12 | cooked oil in a supermarket, vitamin E (1%) | 0.08 | 0.09 | 0.09 | 0.11 | 0.11 |
| Example 13 | cooked oil in a restaurant, vitamin E (1%) | 0.1 | 0.1 | 0.11 | 0.12 | 0.13 |
| Example 14 | cooked oil in a supermarket, vitamin E (0.5%) | — | 0.105 | 0.14 | 0.144 | 0.187 |
| Example 15 | cooked oil in a supermarket, vitamin E (0.25%) | — | 0.104 | 0.111 | 0.145 | 0.094 |
| Example 16 | cooked oil in a supermarket, vitamin E (0.1%) | — | 0.214 | 0.283 | 0.0999 | — |
| Example 17 | cooked oil in a supermarket, vitamin E (1%) sprayed | 0.069 | 0.092 | 0.092 | 0.091 | 0.178 |
| Comparative Example 12 | cooked oil in a supermarket | 0.07 | 0.94 | 1.08 | 0.3 | 1.39 |
| Comparative Example 13 | cooked oil in a restaurant | 0.12 | 0.58 | 0.11 | 1.49 | 0.4 |

[FIG. 11]

EP 3 498 146 A1

| elapsed days | | 0 | 1 | 2 | 3 | 4 | 5 | 6 |
|---|---|---|---|---|---|---|---|---|
| Example 18 | Place A | 0.88 | 1.82 | 1.41 | 2.59 | 2.3 | 2.96 | 2.43 |
| | Place B | 0.81 | 1.92 | 1.97 | 3.74 | 1.81 | 2.27 | 2.59 |
| | Place C | 0.47 | 2 | 2.27 | 1.98 | 2.58 | 2.06 | 2.48 |
| Comparative Example 14 | Place A | 0.92 | — | 2.19 | 4.39 | 13.61 | 7.46 | 4.96 |
| | Place B | 1.08 | 1.87 | 2.19 | 3.64 | 6.81 | 6.64 | 4.77 |
| | Place C | 0.84 | 1.73 | 3.43 | 3.95 | 8.21 | 7.4 | 6.49 |

[FIG. 12]

11(12,13)

1

## INTERNATIONAL SEARCH REPORT

| International application No. |
| --- |
| PCT/JP2017/029162 |

**A. CLASSIFICATION OF SUBJECT MATTER**
*A47L23/22*(2006.01)i, *B32B5/26*(2006.01)i, *B32B27/12*(2006.01)i, *D21H13/00*(2006.01)i, *D21H17/67*(2006.01)i

According to International Patent Classification (IPC) or to both national classification and IPC

**B. FIELDS SEARCHED**

Minimum documentation searched (classification system followed by classification symbols)
A47L23/22, B32B5/26, B32B27/12, D21H13/00, D21H17/67

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-13418 A (Daiichi Eizai Co., Ltd.), 20 January 2005 (20.01.2005), paragraphs [0002] to [0008], [0027] to [0030]; fig. 1 to 2 (Family: none) | 1-16 |
| A | JP 8-228992 A (Nitto Denko Corp.), 10 September 1996 (10.09.1996), paragraphs [0008] to [0018]; fig. 1 (Family: none) | 1-16 |
| A | JP 10-43124 A (Mitsui Chemicals, Inc.), 17 February 1998 (17.02.1998), paragraphs [0005] to [0007]; fig. 2 (Family: none) | 1-16 |

☐ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 November 2017 (06.11.17) | 14 November 2017 (14.11.17) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005013418 A

- JP 5395 A